# FASCICULE DE BREVET EUROPEEN

(11) **EP 0 434 489 B1**
(45) Date de publication et mention de la délivrance du brevet: **01.06.1994**
(21) Numéro de dépôt: 90403424.6
(22) Date de dépôt: 30.11.1990
(51) Int. Cl.: H01G 9/00

(54) **Condensateur à électrolyte solide, notamment au tantale, à fusible incorporé contrôlable**
Festelektrolytkondensator, insbesondere aus Tantal, mit kontrollierbarer eingebauter Schmelzsicherung
Solid electrolytic capacitor, namely tantalum capacitor, with incorporated controllable fuse

(30) Priorité: 19.12.1989 FR 8916820
(43) Date de publication de la demande: 26.06.1991
(73) Titulaire: SPRAGUE FRANCE, F-37100 Tours Cédex (FR)
(72) Inventeur: Gouvernelle, Didier, F-37360 Semblancay (FR)
(74) Mandataire: Santarelli, Marc

(56) Documents cités:
- EP-A- 0 350 366
- US-A- 4 539 623
- US-A- 4 763 228
- TOUTE L' ELECTRONIQUE, no. 547, octobre 1989, page 18; Paris, FR; "Sprague: du condensateur à l'inductance"

## Description

L'invention concerne l'aménagement d'un fusible dans un condensateur à électrolyte solide tel qu'un condensateur au tantale et a trait à un perfectionnement au procédé et au condensateur décrits dans la demande de brevet français 88.09015 déposée le 4 Juillet 1988 et non encore publiée.

Dans le but notamment de réduire les conséquences fâcheuses d'un court-circuit dans un circuit comportant un ou plusieurs condensateur(s) à électrolyte solide, on a cherché à intégrer un fusible au sein même de ce(s) condensateur(s) tout en limitant le supplément d'encombrement qui en résulte.

Il est rappelé tout d'abord qu'un condensateur à électrolyte solide, notamment du type au tantale, comporte principalement une anode poreuse d'où vient en saillie un fil d'anode, et qui est recouverte complètement ou partiellement de diverses couches (en pratique des couches de diélectrique/oxyde, de dioxyde de manganèse remplissant sensiblement les pores de l'anode et constituant l'électrolyte solide, et une couche conductrice formant contrélectrode (cathode)). Ceci constitue un corps de condensateur que l'on enrobe dans une matière électriquement isolante après avoir fixé aux électrodes des languettes de connexion terminées par des bornes de sortie. On obtient ainsi des condensateurs très compacts de forme géométrique simple (cylindre ou plus généralement parallèlépipède rectangle).

On connaît déjà divers types de tels condensateurs à fusible incorporé.

Ainsi le document US-4.107.762 décrit un condensateur dans lequel la languette formant la borne négative est connectée à la contr'électrode par un fusible noyé dans l'enrobage isolant, ce fusible étant formé par un double ruban d'aluminium et de ruthénium-palladium. En cas de court-circuit, l'échauffement de ce fusible produit de façon exothermique un alliage de ces éléments et une coupure électrique entre cette borne négative et la contr'électrode.

Cette solution, qui donne satisfaction dans de nombreux cas, présente toutefois l'inconvénient d'une assez grande dispersion dans les longueurs efficaces ou utiles de ces fusibles, et donc des seuils de courant associés.

Pour pallier cet inconvénient on a proposé par la suite, par le document US-4.224.656, d'utiliser un bloc à fusible comportant un bloc isolant à faces parallèles au travers duquel est ménagé un perçage ainsi qu'un fil fusible disposé parallèlement à l'axe de ce perçage, dont la longueur efficace est donc déterminée de façon très précise.

La précision de ce bloc à fusible est améliorée par le fait que cette longueur efficace de fil fusible se trouve disposée dans une poche d'air thermiquement isolante qui évite que la chaleur générée dans ce fil par effet JOULE ne puisse diffuser dans le condensateur et retarder la coupure du circuit. La fabrication de tels blocs est toutefois assez longue et délicate.

En vue d'une plus grande facilité de fabrication, pour un niveau de performances comparable le document EP-0 232 868 a proposé un élément à fusible comportant une plaque isolante sur laquelle deux couches conductrices disjointes de géométrie très précise sont reliées par un fil fusible disposé en un emplacement déterminé grâce à quoi sa longueur efficace est déterminée avec précision. Ce fil fusible est enrobé dans une substance élastique thermiquement isolante telle qu'une résine silicone dans laquelle sont formées des bulles améliorant l'isolation thermique.

On peut noter que les documents US-4.224.656 et EP-0 232 868 parviennent à un calibrage de la longueur efficace du fil fusible grâce à la mise en oeuvre d'un élément de support additionnel apparemment nécessaire, au cours de la fabrication, pour maintenir à un écartement prédéterminé les zones auxquelles doivent être fixées les extrémités du fil fusible.

La demande de brevet 88.09015 précitée a eu pour objet de simplifier encore plus l'intégration d'un fusible dans un condensateur à électrolyte solide, et donc d'en réduire le coût, tout en conduisant à un niveau comparable de performances, grâce à la suppression de tout élément intermédiaire de support rapporté entre la languette de connexion négative et la contr'électrode.

Elle a proposé à cet effet de disposer une longueur efficace prédéterminée de fil fusible calibré entre deux tronçons électriquement isolés de cette languette, laquelle est directement connectée par un de ses tronçons à la contr'électrode.

Très généralement cette demande de brevet a proposé un condensateur à électrolyte solide comportant, noyé dans un bloc de résine électriquement isolante, un corps de condensateur muni de deux électrodes électriquement connectées, respectivement, à deux languettes de connexion débouchant hors du bloc pour constituer des bornes de sortie (+, -), un élément fusible de longueur utile prédéterminée étant monté en série entre le corps de condensateur et l'une choisie des bornes de sortie, caractérisé en ce que la languette de connexion comportant cette borne de sortie choisie est formée d'un premier tronçon fixé à l'une des électrodes du corps de condensateur et d'un second tronçon, électriquement isolé vis-à-vis du premier tronçon et du corps de condensateur, et débouchant hors du bloc pour former ladite borne de sortie choisie, l'élément fusible établissant à lui seul une liaison électrique entre les tronçons en étant enrobé d'une masse-support de résine rigide thermiquement isolante s'étendant de l'un à l'autre des deux tronçons en sorte de les solidariser mécaniquement, cette masse-support étant elle-même noyée dans la résine constitutive du bloc.

Pour la fabrication d'un tel condensateur à fusible incorporé la demande de brevet 88.09015 a proposé un procédé de fabrication d'un condensateur à électrolyte solide à élément fusible incorporé, selon lequel :
- on élabore un corps de condensateur muni d'électrodes ;
- on délimite par découpe dans une plaque, au moins une bande discontinue reliée à un cadre de référence et comportant deux tronçons extrêmes solidaires dudit cadre et un tronçon médian relié au cadre de référence par une bande continue de liaison ;
- on plie certains des tronçons de la bande discontinue selon des lignes transversales de pliage en sorte de leur donner une forme définitive ;
- on fixe avant ou après pliage un élément fusible entre le tronçon médian et l'un des tronçons extrêmes et on enrobe cet élément fusible dans une masse-support en résine rigide thermiquement isolante s'étendant de l'un à l'autre de ces tronçons en sorte de les solidariser mécaniquement et constituer une languette de connexion ;
- on dissocie le tronçon médian vis à vis de la bande continue de liaison et on fixe ce tronçon médian ainsi que l'autre tronçon extrême formant une languette de connexion, respectivement, aux électrodes du corps de condensateur ;
- on enrobe par moulage ce corps de condensateur et ces languettes de connexion dans un bloc de résine électriquement isolante ; et
- on dissocie les languettes vis-à-vis du cadre de référence.

En fait, ces diverses solutions précitées ont en commun l'inconvénient de ne pas permettre aisément le contrôle de l'intégrité du fusible puisque celui-ci (c'est nécessaire pour qu'il puisse assumer sa fonction) est monté en série avec le condensateur proprement dit.

L'invention a pour objet de satisfaire l'objet de la demande de brevet 88.09015 non publiée, et en outre de permettre un contrôle aisé de l'intégrité du fusible.

Elle propose à cet effet un condensateur à électrolyte solide comportant, noyé dans un bloc de résine électriquement isolante, un corps de condensateur muni de deux électrodes électriquement connectées respectivement, à deux languettes de connexion débouchant hors du bloc pour constituer des bornes de sortie (+, -), un élément fusible de longueur utile prédéterminée étant monté en série entre le corps de condensateur et l'une choisie (-) des bornes de sortie, caractérisé en ce que la languette de connexion comportant cette borne de sortie choisie est formée d'un premier tronçon fixé à l'une des électrodes du corps de condensateur et débouchant hors du bloc pour former une borne de test et d'un second tronçon, électriquement isolé vis-à-vis du premier tronçon et du corps de condensateur, et débouchant hors du bloc pour former ladite borne de sortie choisie (-), l'élément fusible établissant à lui seul une liaison électrique entre ces tronçons en étant enrobé d'une masse-support de résine rigide ou souple thermiquement isolante s'étendant de l'un à l'autre des deux tronçons, cette masse-support étant elle-même noyée dans la résine constitutive du bloc.

Selon des dispositions préférées :
- ces tronçons s'étendent parallèlement l'un à l'autre, depuis l'élément fusible qui leur est rapporté transversalement jusqu'à l'extérieur du bloc pour former les bornes de test et de sortie ;
- les premier et second tronçons de languette comportent deux pattes parallèles coplanaires reliées par l'élément fusible ;
- les pattes coplanaires s'étendent perpendiculairement à des portions de chacun desdits tronçons avec lesquelles ces pattes définissent une cavité au dos de laquelle est rapportée la masse-support ;
- l'élément fusible est un fil de section calibrée s'étendant transversalement d'une tronçon à l'autre ;
- la masse-support est faite en une résine non carbonisable à la température de fusion de l'élément fusible ;
- la masse-support est faite en une résine polymérisée sous rayonnement ultra violet ;
- le corps de condensateur comporte un coeur poreux en tantale.

L'invention propose en outre un procédé adapté à la fabrication d'un condensateur à électrolyte solide à élément fusible incorporé, selon lequel :
- on élabore un corps de condensateur muni d'électrodes ;
- on délimite par découpe dans une plaque, au moins une bande discontinue reliée à un cadre de référence et comportant d'une part, deux tronçons globalement parallèles et, d'autre part un troisième tronçon, tous trois solidaires dudit cadre, l'un des tronçons parallèles étant plus long que l'autre ;
- on plie les tronçons de la bande discontinue selon des lignes transversales de pliage en sorte de leur donner une forme définitive ;
- on fixe avant ou après pliage un élément fusible entre ces tronçons parallèles extrêmes et on enrobe cet élément fusible dans une masse-support en résine rigide ou souple thermiquement isolante s'étendant de l'un à l'autre de ces tronçons parallèles ;
- on enrobe par moulage ce corps de condensateur et une partie de ces languettes de connexion dans un bloc de résine électriquement isolante ; et
- on dissocie les languettes vis-à-vis du cadre de référence en sorte de former des bornes (+, -, test) pour le condensateur.

Des objets, caractéristiques et avantages de l'invention ressortent de la description qui suit, donnée à titre d'exemple non limitatif, en regard des dessins annexés sur lesquels :
- la figure 1 est une vue schématique en coupe d'un condensateur au tantale comportant un fusible incorporé conforme à l'invention ;
- la figure 1A en est un schéma électrique correspondant ;
- la figure 2 est une vue partielle de dessus d'une plaque dans laquelle sont découpées les languettes de connexion du condensateur de la figure 1 ; et
- la figure 3 est une vue partielle en perspective de la plaque de la figure 2, après des opérations de pliage, de fixation du fil fusible et de poinconnage.

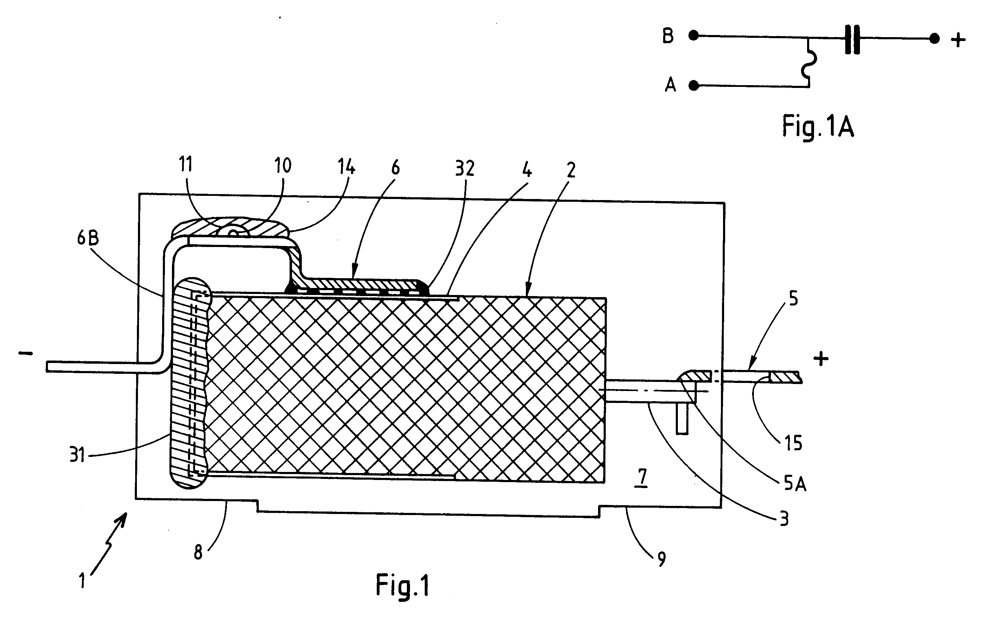

La figure 1 représente un condensateur au tantale 1 comportant un corps de condensateur 2 vis-à-vis duquel une tige d'anode 3 en tantale vient en saillie.

Ce corps de condensateur 2 est de tout type connu approprié avec un coeur poreux au tantale oxydé superficiellement, enrobé dans un électrolyte solide formé de dioxyde de manganèse et recouvert partiellement de diverses couches appropriées dont une couche extérieure de contr'électrode 4 isolée électriquement vis-à-vis de la tige d'anode 3.

Une languette conductrice de connexion positive 5 est fixée à la tige d'anode 3 (à la faveur d'une entaille 5A avantageusement prévue à cet effet) tandis qu'une languette conductrice de connexion négative notée 6 dans son ensemble est fixée à la couche de contr'électrode 4.

Le tout est enrobé dans un bloc parallélépipèdique rectangle de matière isolante 7, en pratique une résine époxy de tout type approprié, de telle sorte que les languettes conductrices 5 et 6 viennent en saillie pour former des bornes de sortie + et - . Des creux 8 et 9 sont ménagés près d'arêtes opposées du bloc 2 pour permettre que les extrémités libres des languettes 5 et 6A/6B puissent se replier pour l'essentiel dans l'encombrement du bloc 7.

La languette conductrice 6 est en fait dédoublée en deux tronçons 6A et 6B, électriquement isolés à ceci près qu'un fil fusible calibré 10 (perpendiculaire au plan de la figure 1) est fixé en ses extrémités à chacun de ces tronçons par exemple par brasure, avec formations de zones de brasure 11. Un seul (ici 6B) de ces tronçons se prolonge jusqu'au corps de condensateur 2, mais tous deux débouchent à l'extérieur du bloc 7, la portion 6A définissant une borne négative de sortie A et la portion 6B une borne de test B.

Ce fil fusible 10 est de tout type approprié ; il s'agit par exemple d'un fil vendu sous la marque "PYROFUSE" par la Société PYROFUSE CORPORATION. Il peut s'agir d'un fil d'aluminium recouvert d'une pellicule de palladium ou de cuivre, ou encore d'un fil plomb-étain-argent, ou plomb-argent dans des proportions appropriées connues.

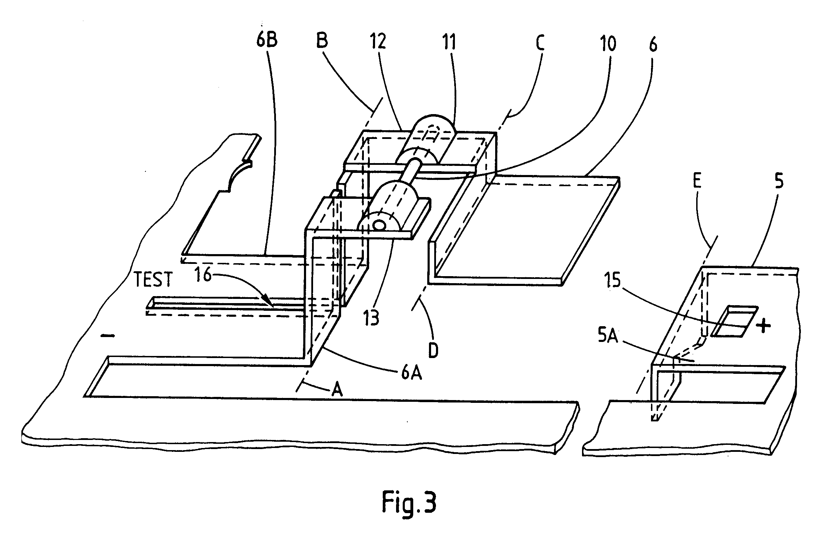

Les tronçons 6A et 6B comportent des pattes parallèles 12 et 13, respectivement, entre lesquelles est ménagé un espace de largeur constante prédéterminée (voir figure 3) qui détermine la longueur efficace du fil fusible 10.

Ce fil 10 est noyé dans une résine de protection 14 qui adhère par ailleurs aux pattes 12 et 13, en étant à l'extérieur de la cavité ménagée entre des portions parallèles des tronçons 6A et 6B et dont les portions 12 et 13 définissent le fond. En variante non représentée, le fil est disposé à l'intérieur de la cavité comme dans la demande de brevet 88-090515 précitée.

Cette résine de protection 14 a essentiellement pour rôle une protection thermique de la résine isolante constitutive du bloc 7 en cas de fusion du fil fusible sous l'effet d'une intensité exagérée ; cela permet une définition précise des caractéristiques de fusion (environ 400°C voire jusqu'à 660°C selon la nature des matériaux constitutifs du fil fusible). De manière préférée cette résine de protection 14 est choisie de manière à ne pas subir de carbonisation à la température de fusion du fil fusible, de manière à ne pas introduire de résistance résiduelle.

Cette résine de protection, thermiquement isolante, non carbonisable à la température de fusion du fusible 10, est par exemple une résine de type CHIPBONDER 360 ou LID 1043.

Cette résine peut aussi être similaire à la résine constitutive du bloc 7, étant précisé que, étant formée avant ledit bloc (voir plus loin), elle présente dans le condensateur 1 fini un interface qui permet d'en déceler l'existence.

Un orifice 15 peut être avantageusement ménagé dans la languette 5 pour améliorer l'ancrage de celle-ci dans le bloc 7.

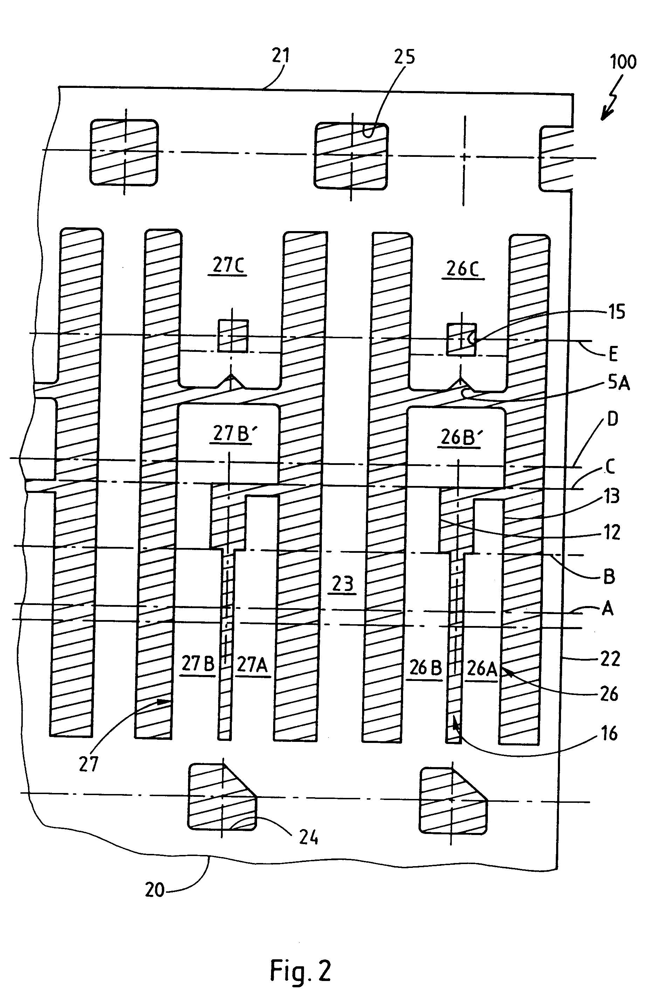

Les figures 2 et 3 illustrent deux étapes successives dans la fabrication du condensateur 1, choisies de manière à montrer le détail de la formation des languettes 5 et 6A/6B et de la fixation du fil fusible 10.

La figure 2 montre une portion d'une plaque 100 en matériau électriquement conducteur (par exemple d'alliage Fer-Nickel de type FN 42) dans laquelle diverses découpes ont été pratiquées (zones hachurées à hachures espacées), par exemple par estampage.

Cette plaque conductrice ajourée (en anglais "lead frame") comporte ici deux bandes horizontales 20 et 21, solidaires de bandes verticales 22, 23 etc... et comportant des perçages 24 et 25 de positionnement. Cette disposition est reproduite à l'identique de façon périodique le long des bandes horizontales.

Dans le cadre de référence constitué des bandes 20 à 23 est ménagée une bande verticale discontinue 26 composée de tronçons à flancs coplanaires et destinés à devenir les languettes de connexion 5, 6A et 6B du condensateur 1 de la figure 1.

Ainsi la bande 26 comporte, à partir de la bande horizontale 20 et du côté de la bande 22, un tronçon 26A destiné à constituer la languette 6A et, du côté de la bande 23, un tronçon 6B destiné à constituer la languette 6B.

Ces tronçons 26A et 26B sont séparés par une fente 16 qui s'élargit entre deux portions de ces tronçons destinées à former les portions 12 et 13 de la figure 3 puis déboucher latéralement vers la droite entre l'extrémité du tronçon 26A et la tête élargie 26B′ du tronçon 26B.

Cette bande 26 comporte enfin un tronçon 26C raccordé à la bande horizontale 21, destiné à constituer la patte 5 du condensateur 1 et dans lequel sont ménagés le perçage 15 et l'entaille 5A du tronçon 5.

Une bande 27 à gauche de la bande 26 comporte de même des tronçons 27A, 27B, et 27C similaires, et ainsi de suite.

On procède alors au pliage de la plaque ajourée 100 selon les lignes de pliage A, B, C, D et E en sorte de donner aux tronçons des bandes 26 et 27 la configuration voulue pour les languettes 5, 6A et 6B. Les lignes de pliage sont figurées sur la figure 3. Ce pliage n'est pas appliqué aux bandes 22, 23 et suivantes qui définissent ainsi, avec les bandes horizontales 20 et 21 un plan de référence.

On effectue alors la fixation par brasure du fil fusible calibré 10 qui s'étend ici sur toute la largeur de la bande 26 (ou 27). Comme les tronçons 26A et 26B sont maintenus en position relative par la bande 20, l'écartement transversal entre les pattes 12 et 13 reste constant, égal à leur écartement dans la configuration plane de la figure 2, tandis que leurs flancs sont coplanaires comme à la figure 2.

On applique alors la résine de protection 14.

Pour des raisons de facilité d'emploi cette résine de protection 14 est avantageusement d'un type propre à polymériser sous rayonnement ultra-violet. Il s'agit avantageusement d'une résine de type CHIPBONDER 360 ou LID 1043. Ce peut être aussi une résine SILICONE du type AMICON XS 2213/102..

On prépare par ailleurs un corps de condensateur 4 dont on revêt avantageusement la tranche (généralement argentée) opposée à la tige d'anode 3 d'une couche 31 de résine isolante de tout type connu approprié de manière à éviter tout court-circuit entre cette tranche et la partie verticale des tronçons 6B et 6A de la languette 6. En variante cette résine isolante est directement appliquée à ladite partie verticale des tronçons 6B et 6A.

On positionne alors le corps de condensateur 4 auprès des tronçons 6A, 6B et 5 ; on colle au corps 4 la partie horizontale du tronçon 6B, en pratique avec de la colle à l'argent 32, tandis que l'on soude la languette 5 au fil de tantale 3.

On dispose enfin l'ensemble, corps de condensateur et languettes 6A, 6B, 5 entre les parties d'un moule en utilisant les bandes 20 à 23 à des fins de positionnement. On injecte la résine 7 et après polymérisation de celle-ci (en pratique sous température) on dégage le condensateur du moule.

Cette opération de moulage est effectuée pour chaque bande 26, 27 etc... délimitée par découpe dans la plaque 100.

Il n'y a plus alors qu'à couper les zones de jonctions des languettes 6A et 6B aux bandes 20 et 21. Le condensateur 1 à fusible 10 incorporé est alors prêt à l'emploi. Les extrémités + et A des bandes 5 et 6A sont les bornes d'utilisation du condensateur à fusible 10 incorporé. L'extrémité B de la bande 6B est la borne de test pouvant être utilisée pour vérifier la continuité du fusible (test à effectuer entre A et B).

Il va de soi que la description qui précède n'a été proposée qu'à titre illustratif non limitatif et que de nombreuses variantes peuvent être proposées sans sortir du cadre de l'invention. Ainsi par exemple l'élément fusible peut être prévu dans la languette positive ; il peut être disposé en bout du corps de condensateur et non pas sur un côté.

## Revendications

1. Condensateur à électrolyte solide (1) comportant, noyé dans un bloc (9) de résine électriquement isolante, un corps de condensateur (2) muni de deux électrodes (3, 4) électriquement connectées respectivement, à deux languettes de connexion (5, 6) débouchant hors du bloc (9) pour constituer des bornes de sortie (+, -), un élément fusible (10) de longueur utile prédéterminée étant monté en série entre le corps de condensateur (2) et l'une choisie (-) des bornes de sortie, caractérisé en ce que la languette de connexion (6) comportant cette borne de sortie choisie est formée d'un premier tronçon (6B) fixé à l'une des électrodes (4) du corps de condensateur (2) et débouchant hors du bloc pour former une borne de test (B) et d'un second tronçon (6A), électriquement isolé vis-à-vis du premier tronçon (6B) et du corps de condensateur (2), et débouchant hors du bloc (9) pour former ladite borne de sortie choisie (-), l'élément fusible (10) établissant à lui seul une liaison électrique entre ces tronçons (6A, 6B) en étant enrobé d'une masse-support de résine rigide ou souple thermiquement isolante (14) s'étendant de l'un à l'autre des deux tronçons, cette masse-support (14) étant elle-même noyée dans la résine constitutive du bloc (9).

2. Condensateur selon la revendication 1, caractérisé en ce que ces tronçons s'étendent parallèlement l'un à l'autre, depuis l'élément fusible (10) qui leur est rapporté transversalement jusqu'à l'extérieur du bloc pour former les bornes de test et de sortie.

3. Condensateur selon la revendication 1 ou la revendication 2, caractérisé en ce que les premier (6A) et second (6B) tronçons de languette comportent deux pattes parallèles (12, 13) coplanaires reliées par l'élément fusible (10).

4. Condensateur selon la revendication 3, caractérisé en ce que les pattes coplanaires (12, 13) s'étendent perpendiculairement à des portions de chacun desdits tronçons avec lesquelles ces pattes définissent une cavité au dos de laquelle est rapportée la masse-support (14) contenant l'élément fusible.

5. Condensateur selon l'une quelconque des revendications 2 à 4, caractérisé en ce que l'élément fusible (10) est un fil de section calibrée s'étendant transversalement d'un tronçon à l'autre (12, 13).

6. Condensateur selon l'une quelconque des revendications 1 à 5, caractérisé en ce que la masse-support (14) est faite en une résine non carbonisable à la température de fusion de l'élément fusible.

7. Condensateur selon l'une quelconque des revendications 1 à 6, caractérisé en ce que la masse-support (14) est faite en une résine polymérisée sous rayonnement ultra-violet.

8. Condensateur selon l'une quelconque des revendications 1 à 7, caractérisé en ce que le corps de condensateur comporte un coeur poreux en tantale.

9. Procédé adapté à la fabrication d'un condensateur à électrolyte solide à élément fusible incorporé, conforme à l'une quelconque des revendications 1 à 8, selon lequel :
- on élabore un corps de condensateur (2) muni d'électrodes ;
- on délimite par découpe dans une plaque (100), au moins une bande discontinue (26, 27) reliée à un cadre de référence (20-23) et comportant d'une part, deux tronçons globalement parallèles (26A, 26B, 26C ; 27A, 27B) et, d'autre part, un troisième tronçon (26C, 27C), tous trois solidaires dudit cadre, l'un (26B, 27B) des tronçons parallèles étant plus long que l'autre (26A, 27A) ;
- on plie les tronçons de la bande discontinue selon des lignes transversales de pliage (A, B, C, D, E) en sorte de leur donner une forme définitive ;
- on fixe avant ou après pliage un élément fusible (10) entre ces tronçons parallèles (26A, 26B) extrêmes et on enrobe cet élément fusible dans une masse-support (14) en résine rigide ou souple thermiquement isolante s'étendant de l'un à l'autre de ces tronçons parallèles ;
- on enrobe par moulage ce corps de condensateur et une partie de ces languettes de connexion dans un bloc (9) de résine électriquement isolante ; et
- on dissocie les languettes (5, 6A et 6B) vis-à-vis du cadre de référence (20-23) en sorte de former des bornes (+, -, test) pour le condensateur.

10. Procédé selon la revendication 9, caractérisé en ce que l'on forme la masse-support (14) en soumettant à un rayonnement ultra violet une résine polymérisable sous rayonnement ultra-violet.

## Patentansprüche

1. Festelektrolytkondensator (1) mit einem in einen Block (9) aus elektrisch isolierendem Harz eingebetteten Kondensatorkörper (2), der mit zwei Elektroden (3, 4) versehen ist, die jeweils mit einer von zwei Anschlußzungen (5, 6) elektrisch verbunden sind, die aus dem Block (9) herausragen, um Ausgangsklemmen (+, -) zu bilden, ferner mit einem Schmelzsicherungselement (10) vorbestimmter Nutzlänge, das in Reihe zwischen den Kondensatorkörper (2) und eine ausgewählte (-) der Ausgangsklemmen geschaltet ist, **dadurch gekennzeichnet**, daß die Anschlußzunge (6), welche diese ausgewählte Ausgangsklemme aufweist, aus einem ersten Abschnitt (6B), der an einer der Elektroden (4) des Kondensatorkörpers (2) befestigt ist und zur Ausbildung einer Prüfklemme (B) aus dem Block herausragt, und aus einem zweiten Abschnitt (6A) gebildet ist, der gegenüber dem ersten Abschnitt (6B) und dem Kondensatorkörper (2) elektrisch isoliert ist und aus dem Block (9) herausragt, um besagte ausgewählte (-) Ausgangsklemme zu bilden, wobei allein das Schmelzsicherungselement (10) eine elektrische Verbindung zwischen diesen Abschnitten (6A, 6B) ausbildet und dabei von einer Stützmasse aus einem starren oder nachgiebigen, wärmeisolierenden Harz (14) umgeben ist, die von einem der beiden Abschnitte zum anderen verläuft und ihrerseits in das den Block (9) bildende Harz eingebettet ist.

2. Kondensator nach Anspruch 1, dadurch gekennzeichnet, daß diese Abschnitte ab dem Schmelzsicherungselement (10), das an ihnen in Querrichtung angebracht ist, bis aus dem Block heraus parallel zueinander verlaufen, um die Prüf- und die Ausgangsklemme auszubilden.

3. Kondensator nach Anspruch 1 oder Anspruch 2, dadurch gekennzeichnet, daß der erste (6A) und der zweite (6B) Abschnitt der Zunge zwei parallele, komplanare, durch das Schmelzsicherungselement (10) miteinander verbundene Laschen (12, 13) aufweisen.

4. Kondensator nach Anspruch 3, dadurch gekennzeichnet, daß die komplanaren Laschen (12, 13) senkrecht zu Teilen jedes Abschnitts verlaufen, mit denen sie eine Vertiefung festlegen, auf deren Rückseite die das Schmelzsicherungselement enthaltende Stützmasse (14) angebracht ist.

5. Kondensator nach einem der Ansprüche 2 bis 4, dadurch gekennzeichnet, daß das Schmelzsicherungselement (10) aus einem sich quer von einem Abschnitt zum anderen (12, 13) erstreckenden Draht mit kalibriertem Querschnitt besteht.

6. Kondensator nach einem der Ansprüche 1 bis 5, dadurch gekennzeichnet, daß die Stützmasse (14) aus einem Harz hergestellt ist, das bei der Schmelztemperatur des Schmelzsicherungselementes nicht karbonisierbar ist.

7. Kondensator nach einem der Ansprüche 1 bis 6, dadurch gekennzeichnet, daß die Stützmasse (14) aus einem durch Ultraviolettbestrahlung polymerisierten Harz hergestellt ist.

8. Kondensator nach einem der Ansprüche 1 bis 7, dadurch gekennzeichnet, daß der Kondensatorkörper einen porösen Kern aus Tantal aufweist.

9. Verfahren zur Herstellung eines Festelektrolytkondensators mit eingebautem Schmelzsicherungselement nach einem der Ansprüche 1 bis 8, bei dem:
- man einen mit Elektroden versehenen Kondensatorkörper (2) herstellt;
- man durch einen Schnittvorgang in eine Platte (100) wenigstens einen nicht durchlaufenden Streifen (26, 27) festlegt, der an einem Bezugsrahmen (20-23) befestigt ist und einerseits zwei im ganzen gesehen parallele Abschnitte (26A, 26B, 27A, 27B) sowie andererseits einen dritten Abschnitt (26C, 27C) aufweist, die alle drei fest mit besagtem Rahmen verbunden sind, wobei einer (26B, 27B) der parallelen Abschnitte länger als der andere (26A, 27A) ist;
- man die Abschnitte des nicht durchlaufenden Streifens längs querverlaufender Faltlinien (A, B, C, D, E) so faltet, daß man Ihnen eine endgültige Form gibt;
- man vor oder nach dem Falten ein Schmelzsicherungselement (10) zwischen diesen parallelen Endabschnitten (26A, 26B) befestigt und dieses Schmelzsicherungselement mit einer Stützmasse (14) aus starrem oder nachgiebigem, wärmeisolierendem Harz umgibt, die sich von einem dieser parallelen Abschnitte zum anderen erstreckt;
- man den Kondensatorkörper sowie einen Teil der Anschlußzungen durch Gießen in einen Block (9) aus elektrisch isolierendem Harz bettet, und
- man die Zungen (5, 6A und 6B) vom Bezugsrahmen (20-23) so trennt, daß Klemmen (+, -, Prüfung) für den Kondensator gebildet werden.

10. Verfahren nach Anspruch 9, dadurch gekennzeichnet, daß man die Stützmasse (14) formt, indem man ein durch Ultraviolettbestrahlung polymerisierbares Harz einer Ultraviolettbestrahlung aussetzt.

## Claims

1. Solid-electrolyte capacitor (1) having, embedded in a block (9) of electrically insulating resin, a capacitor body (2) equipped with two electrodes (3, 4) which are electrically connected respectively to two flat connecting pins (5, 6) projecting outside the block (9) to form output terminals (+, -), a fuse element (10) of a predetermined useful length being mounted in series between the body of the capacitor (2) and a chosen one (-) of the output terminals, characterised in that the flat connecting pin (6) comprising this chosen output terminal is formed from a first section (6B) fixed to one of the electrodes (4) of the capacitor body (2) and projecting outside the block to form a test terminal (B), and a second section (6A) electrically isolated from the first section (6B) and from the capacitor body (2) and projecting outside the block (9) to form the said chosen output terminal (-), the fuse element (10) establishing on its own an electrical connection between these sections (6A, 6B), being embedded in a thermally insulating flexible or rigid resin support body (14) extending between the two sections, this support body (14) being itself embedded in the resin forming the block (9).

2. Capacitor according to Claim 1, characterised in that these sections extend parallel to each other from the fuse element (10) which is fitted transversely to them to the outside of the block to form the test and output terminals.

3. Capacitor according to Claim 1 or Claim 2, characterised in that the first (6A) and second (6B) sections of flat pin have two parallel coplanar lugs (12, 13) connected by the fuse element (10).

4. Capacitor according to Claim 3, characterised in that the coplanar lugs (12, 13) extend at right angles to portions of each of the said sections, with which these lugs define a cavity, on the top of which is fitted the support body (14) containing the fuse element.

5. Capacitor according to any one of Claims 2 to 4, characterised in that the fuse element (10) is a wire with a calibrated cross section extending transversely from one section to the other (12, 13).

6. Capacitor according to any one of Claims 1 to 5, characterised in that the support body (14) is made of a resin which does not char at the fusion temperature of the fuse element.

7. Capacitor according to any one of Claims 1 to 6, characterised in that the support body (14) is made from a resin which has been polymerised under ultraviolet radiation.

8. Capacitor according to any one of Claims 1 to 7, characterised in that the capacitor body has a porous core made of tantalum.

9. Process adapted for the manufacture of a solid-electrolyte capacitor with an incorporated fuse element, in accordance with any one of Claims 1 to 8, according to which:
- a capacitor body (2) with electrodes is produced;
- by cutting out from a plate (100), at least one discontinuous strip (26, 27) is defined, connected to a reference mount (20 to 23) and having on the one hand two sections which are parallel overall (26A, 26B, 26C; 27A, 27B) and on the other hand a third section (26C, 27C), all three being integral with the said mount, one (26B, 27B) of the parallel sections being longer than the other (26A, 27A);
- the sections of the discontinuous strip are folded along transverse folding lines (A, B, C, D, E) so as to give them their final form;
- before or after folding, a fuse element (10) is fixed between these end parallel sections (26A, 26B) and this fuse element is embedded in a thermally insulating rigid or flexible resin support body (14) extending between these parallel sections;
- this capacitor body and part of these flat connecting pins are embedded, by moulding, in a block (9) of electrically insulating resin; and
- the flat pins (5, 6A and 6B) are separated from the reference mount (20-23) so as to form terminals (+, -, test) for the capacitor.

10. Process according to Claim 9, characterised in that the support body (14) is formed by subjecting to ultraviolet radiation a resin which can be polymerised by ultraviolet radiation.
